# EUROPEAN PATENT SPECIFICATION

(11) **EP 4 106 216 B1**
(45) Date of publication and mention of the grant of the patent: **01.10.2025**
(21) Application number: 21179249.4
(22) Date of filing: 14.06.2021
(51) Int. Cl.: H04B 7/06, H04B 7/08, H04B 17/318, H04B 17/391

(54) **METHOD FOR USER EQUIPMENT FOR PREDICTING A CHANNEL DYNAMIC**
VERFAHREN FÜR BENUTZERGERÄTE ZUR VORHERSAGE EINER KANALDYNAMIK
PROCÉDÉ POUR UN ÉQUIPEMENT UTILISATEUR PERMETTANT DE PRÉVOIR UNE DYNAMIQUE DE CANAL

(43) Date of publication of application: 21.12.2022
(73) Proprietor: VOLKSWAGEN AG, 38440 Wolfsburg (DE); Seat, S.A., 08760 Martorell (ES)
(72) Inventor: MONTERO BAYO, Luca, 08028 Barcelona (ES); PFADLER, Andreas, 13357 Berlin (DE)
(74) Representative: 2SPL Patentanwälte PartG mbB

(56) References cited:
- EP-A1- 3 723 412
- US-A1- 2019 123 433
- US-B1- 10 098 014
- BENJAMIN SLIWA ET AL: "Boosting Vehicle-to-cloud Communication by Machine Learning-enabled Context Prediction", ARXIV.ORG, CORNELL UNIVERSITY LIBRARY, 201 OLIN LIBRARY CORNELL UNIVERSITY ITHACA, NY 14853, 23 April 2019 (2019-04-23), XP081444250, DOI: 10.1109/TITS.2019.2930109

## Description

The present disclosure relates to the field of wireless communication. Embodiments relate to a method for user equipment for predicting a channel dynamic, a method for a network entity for adapting a channel quality reporting, an apparatus, a vehicle and a computer program, more particularly, but not exclusively, to a concept for reducing a reporting overhead of a channel, e.g., a radio channel.

At the frequency bands commonly used in automotive, i.e. frequencies below 6GHz, the use of Multiple Input Multiple Output (MIMO) techniques is of great importance since 4G. As such, in order to extract a gain from diversity and spatial multiplexing, user equipment (UE) is often required to perform channel sensing and report channel state information (CSI).

Providing the NR support of V2X, vehicles are also capable of communicating at frequencies above 6 GHz. In 5G, these higher frequency bands are allocated at the mmWave range of the spectrum (30-300GHz). The use of higher frequency bands in communications implies propagating in a harsher channel, where the free-space path loss scales with (*f*²), and shading by obstacles and atmospheric effects (i.e., water vapor and oxigen absorption, or rain) take a non-negligible role. Services relying on higher frequency systems, with their inherently high channel-induced attenuation, might find challenging to deliver satisfactory QoS in some situations where signal power attenuation is increased, lowering the received Signal-to-Noise Ratio. As a result, 5G User Equipment (UE) is reliant on multi-antenna front-ends to perform beamforming and focus the radiate power towards the intended transmitter/receiver.

It is thus worth considering that vehicles may be equipped with an advanced multi-antenna system. To overcome the challenges posed by steerable beams and channel characterization, the next evolution towards channel and situation awareness will come in future developments of communication technologies (5G and beyond), where the communications, sensing and computing capabilities of UEs will converge and collaborate to boost the performance of the system.

US 2020 / 0219 386 A1 shows a method for determining traffic situations and predicting connected services between road users and the communication quality of services between the road users. The method includes obtaining environmental perception models from road users and rom road-side infrastructure entities; generating a combined environmental perception model for a pre-defined area based on environmental perception models, wherein the environmental perception models are fused within the combined environmental perception model, Further, the method comprises predicting traffic situations within the pre-defined area over points in time in the future based on the combined environmental perception model.

WO 2020 144 188 A1 shows a method for receiving and transmitting data on a sidelink, SL. The method for receiving data on a SL between a receiving radio device and a transmitting radio device comprises a step of transmitting a channel state information report on the SL to the transmitting radio device. Herein, the channel state information report comprises multiple rank indicators. Each of the rank indicator is indicative of a rank for the SL. The method further comprises a step of receiving the data from the transmitting radio device on the SL using one of the indicated ranks depending on a requirement of the data.

WO 2020 257 642 A1 shows embodiments related to techniques for implementing Collective Perception Services in Intelligent Transport Systems. Embodiments include technologies for sharing layered cost maps and/or sharing perceived object clusters in Collective Perception Messages.

BENJAMIN SLIWA ET AL; "Boosting Vehicle-to-cloud Communication by Machine Learning-enabled Context Prediction" discloses a machine learning-enabled context prediction based on a mobility prediction and connectivity maps. For this, a channel is probed passively and the most accurate previously trained prediction model uses measurements for the channel context C(t), the mobility context M(t) and the application context A(t) to predict the currently achievable data rate S(t). Further, a mobility prediction is applied to estimate the future position P(t + τ) for a defined prediction horizon τ'. P(t + τ) is then used to access the corresponding cell entry in the connectivity map in order to obtain an estimation for the future channel context C(t + τ). The future channel context C(t + τ) is the availability of a position forecast P(t + τ') for a defined prediction horizon τ.

US 2019/123433 A1 discloses a method for beamforming for wireless vehicle communication. A beamforming controller is used to maintain a signal for wireless communication as the vehicle travels along the road. As the vehicle moves away from a transceiver the signal strength of wireless communication between the antenna array and the transceiver decreases due to the increased distance and/or a presence of an obstacle between the vehicle and the transceiver. By comparing the signal strength of the wireless communication with the transceiver to a threshold signal strength the beamforming controller may initiated a search for another of the transceivers with which to communicatively couple.

US 10 098 014 B1 discloses a method for performing beam alignment based on driving intentions. For this purpose, a memory may store environment sensing information generated by an onboard radar system, sensor data generated by vehicle sensors, data received as a mmWave communication, such as a HD-3D map, sensor data from other vehicles, infotain-ment data, etc. Further, a communication module receives a wireless message that includes first vehicle data that describes a first vehicle position, a first vehicle speed, a first vehicle heading, and a first vehicle driving intention. For example, the driving intention module may predict based on sensor data from another vehicle or from a traffic server that there is an object that is meters from the current path that the second vehicle is driving in and that the driver will move the second vehicle to a different lane to avoid the object. The coarse driving intention may describe a driving intention to change lanes, move, stop, park, merge onto a highway, travel in a rotary, cross at a four-way stop, etc. by describing the location of the second vehicle as a function of time.

In order to increase the gain of a link, the use of multi-antenna techniques such as MIMO and/or beamforming is expected to be increasingly ubiquitous for vehicular UEs. However, CSI reporting may generate a large overhead. In the art flexible channel state information reporting may be used, resulting in a trade-off between channel knowledge (and therefore gain) and overhead. A further approach is to use reduced sets of beams with wider beam-width to reduce the required beam sweep. Further, beamforming may require periodic beam sweeps to find the most suitable beam (e.g., upon report - beam management), which may be inefficient. These processes can become unwieldy in high mobility vehicular scenarios (e.g., especially Vehicle-to-Vehicle/Infrastructure communication), where the aforementioned problems may be intensified. Characterized by fast changing channels and moderate resource availability, the required information to perform these techniques needs to be more frequently updated, increasing the resources needed for control at the expense of data capacity. Hence, there may be a demand for an improved concept to obtain good channel knowledge efficiently in high mobility V2X scenarios with less reporting. This demand may be satisfied by the subject-matter of the appended independent and dependent claims.

It is therefore a finding that channel knowledge can be determined efficiently by predicting the channel dynamic based on a predictive environmental model. Inefficient CSI reporting can then be reduced or even avoided. For example, the predicted channel dynamic may be predicted based on a predictive environmental model and can be used to maintain CSI reporting parameter, e.g., a reporting rate may be reduced. That way, channel knowledge can be determined efficiently in time.

Examples provide a method for user equipment for predicting a channel dynamic of a radio channel used for communication between the user equipment and a communication device. The method comprises obtaining information about an environment and generating a predictive environmental model. Further, the method comprises predicting the channel dynamic of the radio channel based on the predictive environmental model. Thus, a channel knowledge can be determined in an improved way.

In an example, the method may further comprise adjusting a transmission parameter of the radio channel using the predicted channel dynamic. Thus, a reporting overhead may be reduced by predicting a channel dynamic of the radio channel and adjusting transmission parameter, e.g., for CSI. For example, a reporting overhead of the radio channel may be reduced due to a reduced number of CSI reports in time.

In an example, the method may further comprise forming a beam for communication between the user equipment and the communication device. Thus, a beam may be formed in dependence on the predicted channel dynamic/environment, e.g., to reduce shading by obstacles or beam sweeps.

In an example, the method may further comprise adapting the beam based on the predicted channel dynamic. Thus, a formed beam can be adapted to a change of the predicted channel dynamic/environment, e.g., to reduce shading by obstacles or beam sweeps.

In an example, the method may further comprise predicting a suitable beam pattern for transmitting a signal to the communication device and/or for receiving a signal from the communication device. Thus, a signal transmission may be improved by e.g., a shape or width of the beam chosen on a predicted beam pattern.

In an example, the information about the environment may be obtained by determining information about the environment using one or more sensors of the user equipment and/or receiving information about the environment. Thus, the predictive environmental model can be generated based on sensor data of the UE or received data, e.g., map data received from a third party.

In an example, the method may further comprise predicting a radio channel quality. Thus, e.g., a data transfer of the UE may be adjusted based on the radio channel quality.

In an example, the method may further comprise adjusting a data transmission parameter based on the predicted radio channel quality. Thus, e.g., an application used by the UE can be configured for a specific transmission parameter.

In an example, the method may further comprise adapting a user service based on the predicted radio channel quality. Thus, e.g., a streaming service of the user may be adapted to a supported download rate.

In an example, the method may further comprise adapting a channel quality reporting based on the predicted channel dynamic. Thus, a channel overhead, e.g., by CSI reporting may be reduced due to reduced CSI reporting rate in time.

Examples relates to a method a network entity for adapting a channel quality reporting of a radio channel from user equipment based on a predicted channel dynamic of a radio channel. The method comprises receiving information about the predicted channel dynamic of the radio channel. Further, the method comprises adjusting a content of a reports and/or a reporting rate of the user equipment based on the predicted channel dynamic. Thus, a reporting overhead of the radio channel may be reduced due to a reduced number of CSI reports in time.

Examples further provide an apparatus, comprising one or more interfaces configured to communicate with a communication device or user equipment. The apparatus further comprises processing circuitry configured to control the one or more interfaces and to perform the method for user equipment and/or a communication device described above.

Examples further provide a vehicle comprising the apparatus as described above.

In an example, the vehicle may further comprise a plurality of antennas for beam forming. Thus, different beams can be generated using different antennas to generate a suitable beam pattern for a predicted channel dynamic.

In an example, the method may be performed in dependence of an operation state of the vehicle and/or the scanning is limited to an interior of the vehicle.

Examples further relate to a computer program having a program code for performing the method described above, when the computer program is executed on a computer, a processor, or a programmable hardware component.

Some examples of apparatuses and/or methods will be described in the following by way of example only, and with reference to the accompanying figures, in which
Fig. 1 shows an example of a method for user equipment;
Fig. 2 shows an example of a method for a network entity;
Fig. 3 shows a block diagram of an apparatus; and
Fig. 4 shows a schematic view of a vehicle.

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an 'or', this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

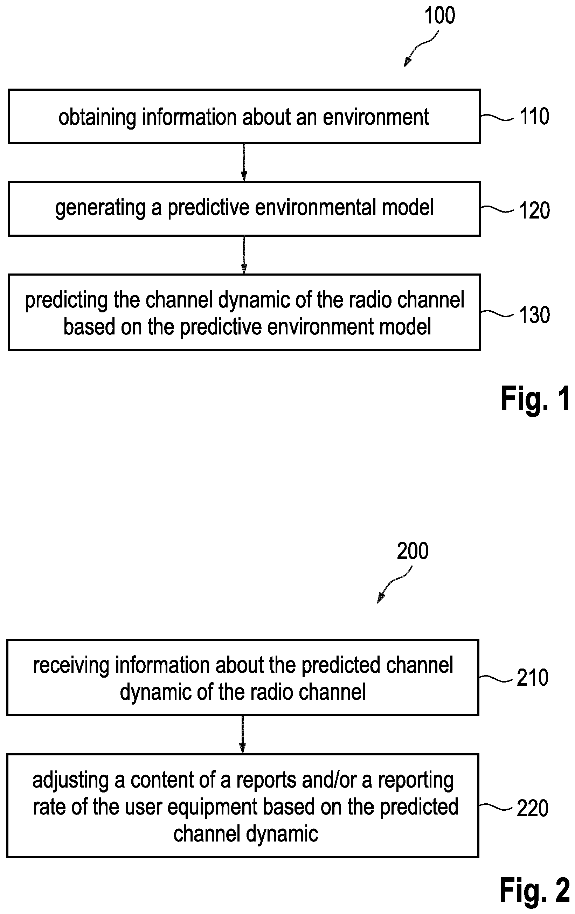

Fig. 1 shows an example of a method 100 for user equipment. The method 100 for the UE is for predicting a channel dynamic of a radio channel used for communication between the user equipment and a communication device. The method 100 comprises obtaining 110 information about an environment and generating 120 a predictive environmental model. Further, the method 100 comprises predicting 130 the channel dynamic of the radio channel based on the predictive environmental model. Thus, a channel knowledge can be determined in an improved way, solely on the basis of the predicted environmental model, which may result in a decreased reporting overhead, e.g., by a reduced CSI report rate.

The UE may communicate in a mobile communication system with the communication device, e.g., a base station. For example, the UE and the communication device may communicate in/via a mobile communication system. The mobile communication system may comprise a plurality of transmission points and/or base stations operable to communicate radio signals with the UE. In an example, the mobile communication system may comprise the UE and the communication device.

A communication device, e.g., a communication device, can be located in the fixed or stationary part of the network or system. A communication device may correspond to a remote radio head, a transmission point, an access point, a macro cell, a small cell, a micro cell, a pico cell, a femto cell, a metro cell etc. The term small cell may refer to any cell smaller than a macro cell, i.e. a micro cell, a pico cell, a femto cell, or a metro cell. Moreover, a femto cell is considered smaller than a pico cell, which is considered smaller than a micro cell. A communication device can be a wireless interface of a wired network, which enables transmission and reception of radio signals to a UE, such as a UE, or UE. Such a radio signal may comply with radio signals as, for example, standardized by 3GPP or, generally, in line with one or more of the above listed systems. Thus, a communication device may correspond to a NodeB, an eNodeB, a BTS, an access point, etc. UE may correspond to an intermediate network node in the communication path between a communication device and a UE. UE may forward a signal received from UE to a communication device, signals received from the communication device to the mobile station transceiver, respectively.

The mobile communication system may be cellular. The term cell refers to a coverage area of radio services provided by a transmission point, a remote unit, a remote head, a remote radio head, communication device, UE or a NodeB, an eNodeB, respectively. The terms cell and base station may be used synonymously. A wireless communication device, e.g., the UE, can be registered or associated with at least one cell (e.g., the communication device), i.e. it can be associated to a cell such that data can be exchanged between the network and the mobile in the coverage area of the associated cell using a dedicated channel, connection or connection.

In general, the UE is a device that is capable of communicating wirelessly. In particular, however, the UE may be a mobile UE, i.e., a UE that is suitable for being carried around by a user. For example, the UE may be a User Terminal (UT) or User Equipment (UE) within the meaning of the respective communication standards being used for mobile communication. For example, the UE may be a mobile phone, such as a smartphone, or another type of mobile communication device, such as a smartwatch, a laptop computer, a tablet computer, or autonomous augmented-reality glasses. For example, the UE and the communication device may be configured to communicate in a cellular mobile communication system. Accordingly the UE and the communication device may be configured to communicate in a cellular mobile communication system, for example in a Sub-6GHz-based cellular mobile communication system (covering frequency bands between 500 MHz and 6 GHz) or in a mmWave-based cellular mobile communication system (covering frequency bands between 20 GHz and 60 GHz). For example, the UE and the communication device may be configured to communicate in a mobile communication system / cellular mobile communication system. In general, the mobile communication system may, for example, correspond to one of the Third Generation Partnership Project (3GPP)-standardized mobile communication networks, where the term mobile communication system is used synonymously to mobile communication network. The mobile communication system may correspond to, for example, a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

In addition the UE/communication device may be suitable for, or configured to, communicating/communicate via non-cellular communication systems, e.g. via a device-to-device vehicular communication system, e.g., according to the IEEE 802.11p standard (Institute of Electrical and Electronics Engineers standard 802.11p for vehicular communication) or via a wireless local area network (e.g., according to IEEE 802.11a, IEEE 802.11b, IEEE 802.11g, IEEE 802.11n, IEEE 802.11ac or IEEE 802.11ax, also known as Wi-Fi 1 through Wi-Fi 6(E)). In particular, the UE and the communication device may be suitable for, or configured to, communicating/communicate in the frequency band between 5 GHz and 7.1 GHz, which covers communication in the 5 GHz band (for WiFi in the 5 GHz band), 5.9 GHz band (for vehicular communication according to the 802.11p standard) and between 5.9 GHz and 7.1 GHz (for WiFi in the 6 GHz band).

A connection between the UE and the communication device may be a wireless connection, e.g. a mmWave-based connection over the mobile communication system (e.g., using carrier frequencies of at least 20 GHz) or may be performed at lower carrier frequencies, e.g. using carrier frequencies of at most 7.5 GHz. For example, the wireless connection between the UE and the communication device may be initiated using the protocols of the mobile communication system, or using a short-range communication system, such as via a wireless local area network outlined above.

As is evident from the above example, while the communication between UE and communication device occurs via the mobile communication system, additional communication and/or alternatively communication (e.g., the communication device is a vehicle) between the UE and the communication device may occur via a vehicular communication system. Such communication may be carried out directly, e.g. by means of Device-to-Device (D2D) communication. Such communication may be carried out using the specifications of the vehicular communication system. An example of D2D is direct communication between vehicles, also referred to as Vehicle-to-Vehicle communication (V2V) or Vehicle-to-Everything (V2X), car-to-car, Dedicated Short Range Communication (DSRC), respectively. Technologies enabling such D2D-communication include 802.11p, 3GPP systems (4G, 5G, NR and beyond), etc.

Obtaining 110 the information about the environment can be done at least partially in advance, e.g., by downloading/loading a map. Thus, the environment for a defined position may be given by the map. For example, the UE may download a map of a downtown area and may combine position data determined by the UE (e.g., using global positioning system, GPS) and/or provided by the user with the map to determine an environment of the UE.

Optionally or alternatively, the UE may obtain the information about the environment in real-time, e.g., by a measurement or receive real-time measurement data. Optionally or alternatively, the UE may receive the (real-time) information about the environment by another UE in the environment of the UE.

Generating 120 a predictive environmental model can be done by a processing circuitry, e.g., a central processing unit, of the UE. For example, a user of the UE may provide information about a planned journey to the UE, e.g. by using a navigation software of a vehicle. Thus, the UE can generate the predictive environmental model based on the planned route. For example, the UE may predict a travel duration based on traffic information (which can be received e.g., by a base station) and based on the travel duration the UE can generate the predicted environmental model, e.g., in dependence of a location of the UE on the route.

For example, the UE can receive information from a mobile obstacle (e.g. another vehicle) and/or an immobile obstacle (like infrastructure, e.g., a traffic light) that the mobile obstacle may vanish (e.g., the vehicle may drive away) in a predefined time (e.g., a red phase of the traffic light). Thus, the predicted environmental model may predict this change of the environment.

According to the claimed invention, the information about the environment comprises dynamic data about a mobile obstacle (e.g., another vehicle or bus) of the environment, i.e. a movement speed of the mobile obstacle. Thus, the UE determines the predicted environmental model based on this information, i.e. the UE predicts the change of the environment by the movement speed of the mobile obstacle. In principle an obstacle, can be an object in the line-of-sight between the UE and the communication device and/or an object in a location that cause non-negligible change in the electromagnetic field at the UE or the communication device.

Predicting 130 the channel dynamic of the radio channel based on the predictive environmental model can be done by a processing circuitry, e.g., a central processing unit, of the UE. The predicted channel dynamic depends on the predicted environmental model. For example, if the predicted environmental model shows no change to the environment in a predefined time (e.g., multiple CSI reporting times) the predicted channel dynamic may be lower than if the predicted environmental model shows a change to the environment in the predefined time. For example, a value for the predicted channel dynamic, indicating a change of the channel dynamic may be zero if no changes in the environment are predicted for the predefined time and may be larger than zero if a change of the environment and thus of the channel dynamic is predicted. For example, if the value for the predicted channel dynamic is zero, a CSI reporting can be reduced or even omitted for the predefined time. For example, with an increasing value for the predicted channel dynamic the need for CSI reporting may increase, which may result in a higher CSI reporting rate for a higher predicted channel dynamic. Optionally or alternatively, combination of measurements for the CSI report, namely Channel Quality Indicator, CQI, Precoding Matrix Index, PMI and Rank Indicator, RI, may change. For example, for different CSI reports not all three measures may be performed, but only one or two measures may be performed, depending on the predicted channel dynamic of the radio channel. Thus, a reporting overhead can be further reduced, without or in addition to reducing the CSI reporting time.

Optionally or alternatively, the predicted channel dynamic may depend on a complexity of the predicted environmental model, e.g., a density of obstacles in the predicted environmental model. For example, the user equipment may be positioned in an open landscape or a downtown area. The open landscape may result in a predicted environmental model for the UE with less complexity as a predicted environmental model for the UE in the downtown area (e.g., the open landscape may have very few obstacles resulting in a low density of obstacles, while the downtown area may have many obstacles resulting in a high(er) density of obstacles). Thus, a (value of a) predicted channel dynamic may be increased for the downtown area in comparison to the open landscape, even if both models indicate no change in the environment in the future, because the likelihood of a change in the downtown area may be increased in comparison to the open landscape. For example, more parameters (e.g., for obstacles) in the predicted environmental model may result in an increased (value of a) predicted channel dynamic, e.g., leading to a need for an increased CSI reporting rate.

According to the claimed invention, the method 100 further comprises adjusting a transmission parameter of the radio channel using the predicted channel dynamic, wherein the transmission parameter includes a repetition rate of a CSI report. The transmission parameter(s) may define/results in a variation of a channel strength over time and/or over frequency. For example, a choice of the transmission parameter(s) of the radio channel may depend on large-scale fading effects and/or on small-scale fading effects. For example, the choice of the transmission parameter(s) of the radio channel may depend on a coherence time (respectively a Doppler spread), a frequency coherence (respectively a Doppler spread or coherence bandwidth), a noise of the channel, an attenuation of the channel, a coverage of the UE (and respectively of the communication device). For example, a transmission parameter may be a spatial angle, a spatial domain, a transmission power, a beam form, a chosen antenna of a plurality of antennas for beamforming or a repetition rate of an CSI report. Thus, by adjusting a transmission parameter a reception of a signal transmitted by the UE at the communication device may be improved. For example, for a predicted environmental model with a high density of obstacles a transmission power may be increased and/or a beamforming may be performed in a way, that less obstacles may interact with the signal, which may increase a reception signal strength at the communication device.

In an example, the method 100 may further comprise forming a beam for communication between the user equipment and the communication device. Thus, a signal strength can be adjusted by the formed beam. For example, for a predicted environmental model with low density of obstacles (e.g., an open landscape) a predicted channel dynamic may be low and thus a frequency coherence may be increased. Thus, a narrow beam (directed towards the communication device from the UE and/or vice versa) can be used for communication, resulting in a decreased transmission power needed for the narrow beam and/or a CSI reporting rate may be further decreased.

In an example, the method 100 may further comprise adapting the beam based on the predicted channel dynamic. For example, for an increased (predicted) channel dynamic (e.g., caused by a (predicted) high density of obstacles in a downtown area) a frequency coherence of the radio channel may be decreased and thus it may be necessary to adjust the transmission parameter(s) to ensure a (stable) performance of the radio channel. For example, for an increased predicted channel dynamic a beam width may be broadened to increase the frequency coherence (to counteract a decrease in the frequency coherence caused by the increased channel dynamic) and a transmission power may be increased as well (to counteract a decrease in the transmission power caused by the increased frequency coherence) to achieve a (stable) performance using the radio channel (e.g., resulting in a constant CSI reporting rate). For example, a coherence time of the beam may be increased for an environment with low density of obstacles and may be decreased for an environment with high density of obstacles.

In an example, the method 100 may further comprise predicting a suitable beam pattern for transmitting a signal to the communication device and/or for receiving a signal from the communication device. The beam patten can be generated e.g., by beam forming and/or by beam steering. For example, the beam pattern can be dynamically altered by changing the signal phase in real-time without changing a hardware element, e.g., an antenna. Thus, the beam pattern can be adjusted in an improved way to the predicted channel dynamic.

In an example, the information about the environment may be obtained by determining information about the environment using one or more sensors of the user equipment and/or by receiving information about the environment. For example, the information about the environment may be received from a communication device of the communication system, e.g., from the communication device, a vehicle, an infrastructure, a smartphone, a base station etc. For example, the one or more sensors may belong to a wide variety of UE sensors, e.g. a radar sensor, a lidar sensor, automotive radar, ultrasound sensor or a vision-related sensor such as camera or infrared sensors.

The information about the environment can be rather (or fully) static, e.g., determined by a map considering immobile obstacles (e.g., infrastructure like house, traffic light etc.) and/or rather dynamic, e.g., determined by sensor data considering, e.g., movement speeds of mobile obstacles (e.g. vehicles, pedestrian, cyclist etc.) in the environment. For example, the predicted channel dynamic may solely depend on a (predicted) movement speed of the UE (e.g., based on a planned route) and static information about the environment (e.g., determined by a map). Thus, the prediction of the channel dynamic may be performed with less computational resources and without a need of further sensors. This may be advantageously in an environment with low density of obstacles, e.g., an open landscape, resulting in an eased determination of the predicted channel dynamic.

For example, the predicted channel dynamic may depend on an environment with a high density of (mobile) obstacles, e.g., a downtown area. Thus, the prediction of the channel dynamic may be improved by measurement data of the one or more sensors, which may reflect a real-time image of the environment.

For example, measurement data of the one or more sensors may be combined with received information about the environment. For example, the received information may provide information about immobile obstacles and the measurement data may provide information about mobile obstacles. Thus, a determination using one or more sensors may be eased (since solely mobile obstacles may be needed to be determined) and/or an effort using the one or more sensors may be decreased. Optionally or alternatively, the data of the immobile obstacles may be used to verify determined immobile obstacles using the one or more sensors or vice versa.

For example, the UE may be equipped with techniques that can interpret Cooperative Perception data (such as Cooperative Perception Messages (CPM)) received from other road agents (other vehicles, pedestrians, infrastructure, back-end applications), which may be frequently updated in a periodical or event-triggered fashion. Further, the UE may be capable of fusing the data obtained with its sensing device (the one or more sensors) and the data received (e.g., received via CPM) to build an environmental model.

The UE may be further capable of performing predictions on the environmental model based on e.g. intention data received from other road agents (e.g., a planned route of another vehicle), generating a predictive environmental model. Further, the UE may use the predicted environmental model (and optionally the environmental model) to predict upcoming channel variations, e.g. by extrapolating current channel dynamic. The UE may be able to provide information about the predicted channel dynamic, requests or commands based on the predicted channel dynamic to the communication device, e.g., to a base station. Thus, the base station may be enabled to adjust a channel quality reporting, e.g., a CSI reporting rate.

For example, the UE may predict a visibility state between the UE and the communication device, e.g., a Line of Sight (LOS), Vehicle-blocked LOS, Building-blocked LOS, etc. Further, the UE may predict the duration of the channel coherence time. For example, if beamforming is used the UE may predict a beam coherence time and/or the UE may predict a range of Angles of Departure (AoD) and Angles of Arrival (AoA) to communicate with the communication device. Thus, the UE may enable/identify relay nodes to multi-hop towards the communication device based on a LOS information, e.g. a LOS map. Further, the UE may be enabled for suitable analog beamforming configurations with PEM-based AoD/AoA, which may lead to a reduced set of beams for beam management. Also an efficient precoding matrix determination and/or precoding matrix determination (with fewer to no feedbacks from the communication device) can be achieved.

In an example, the method 100 may further comprise predicting a radio channel quality. For example, a service available for the UE may depend on the radio channel quality. For example, the information about the predicted channel dynamic (which can be transmitted e.g., to a base station) may be used to influence Predictive Quality of Service (PQoS) modules of a protocol stack, and thus to enable or disable certain services (or certain quality/fidelity of the data payload required for that service), e.g., a tele-operated driving (ToD) session can be only activated if the radio channel quality is above a threshold. Further, the information about the predicted channel dynamic may be used to influence configurations of the UE on either the analog precoding or digital precoding, data/control reference signal allocation, or scheduling to maximize link performance/QoS.

In an example, the method 100 may further comprise adjusting a data transmission parameter based on the predicted radio channel quality. For example, if the predicted channel quality indicates that a ToD-session has to be terminated, the transmission parameter(s) may be adjusted, so that the predicted channel quality may be improved (by e.g., increased transmission power, forming of a beam, redirecting of a formed beam, etc.) and the ToD-session can be continued.

In an example, the method 100 may further comprise adapting a user service based on the predicted radio channel quality. For example, if the channel quality can not be increased to ensure a fully operable ToD-session, streaming service, video telephony etc. the service may be limited to the channel quality, e.g., by limiting a maximal download/upload capacity of this service.

More details and aspects are mentioned in connection with the embodiments described above and/or below. The example shown in Fig. 1 may comprise one or more optional additional features corresponding to one or more aspects mentioned in connection with the proposed concept or one or more examples described below (e.g. Fig. 2 - 6).

Fig. 2 shows an example of a method 200 for a network entity. The method 200 for adapting a channel quality reporting of a radio channel from user equipment based on a predicted channel dynamic of a radio channel, comprises receiving 210 information about the predicted channel dynamic of the radio channel. Further, the method 200 comprises adjusting 220 a content of a reports and/or a reporting rate of the user equipment based on the predicted channel dynamic.

The network entity may be a counterpart to the UE named in reference to Fig. 1.

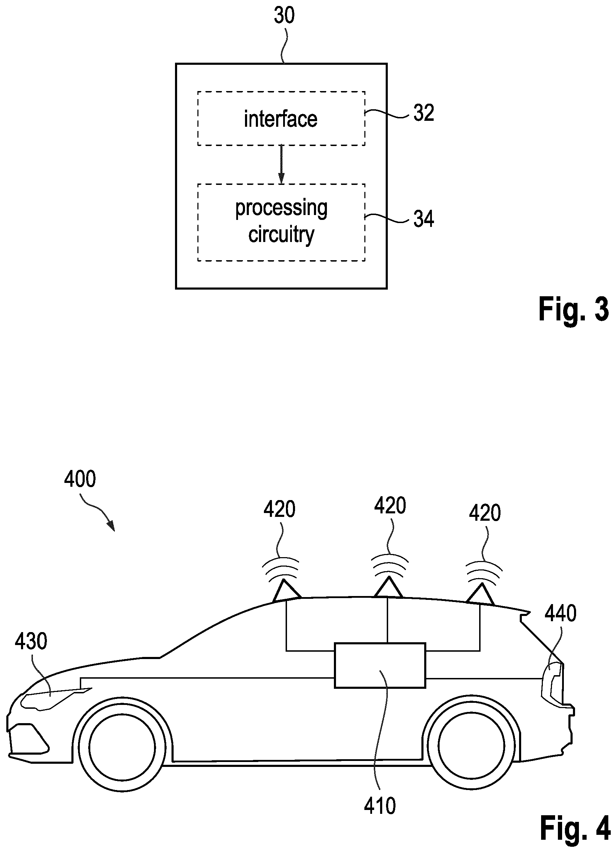

More details and aspects are mentioned in connection with the embodiments described above and/or below. The example shown in Fig. 2 may comprise one or more optional additional features corresponding to one or more aspects mentioned in connection with the proposed concept or one or more examples described above (Fig. 1) and/or below (e.g. Fig. 3 - 4).

Fig. 3 shows a block diagram of an apparatus 30. The apparatus 30 comprises one or more interfaces 32 configured to communicate with a communication device or user equipment. The apparatus 30 further comprises processing circuitry 34 configured to control the one or more interfaces and to perform the method for UE described above (e.g., described with reference to Fig.1) and/or a network entity described above (e.g., described with reference to Fig. 2).

For example, the apparatus 30 can be the UE, where the interface is configured to communicate with the communication device. Alternatively, the apparatus 30 can be the communication device, where the interface 32 is configured to communicate with the UE.

As shown in Fig. 3 the respective one or more interfaces 32 are coupled to the respective processing circuitry 34 at the apparatus 30. In examples the processing circuitry 34 may be implemented using one or more processing units, one or more processing devices, any means for processing, such as a processor, a computer or a programmable hardware component being operable with accordingly adapted software. Similar, the described functions of the processing circuitry 34 may as well be implemented in software, which is then executed on one or more programmable hardware components. Such hardware components may comprise a general-purpose processor, a Digital Signal Processor (DSP), a micro-controller, etc. The processing circuitry 34 is capable of controlling the interface 32, so that any data transfer that occurs over the interface and/or any interaction in which the interface may be involved may be controlled by the processing circuitry 34.

In an embodiment the apparatus 30 may comprise a memory and at least one processing circuitry 34 operably coupled to the memory and configured to perform the below mentioned method.

In examples the one or more interfaces 32 may correspond to any means for obtaining, receiving, transmitting or providing analog or digital signals or information, e.g. any connector, contact, pin, register, input port, output port, conductor, lane, etc. which allows providing or obtaining a signal or information. An interface may be wireless or wireline and it may be configured to communicate, i.e. transmit or receive signals, information with further internal or external components. The one or more interfaces 32 may comprise further components to enable communication between vehicles. Such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

More details and aspects are mentioned in connection with the embodiments described above and/or below. The example shown in Fig. 3 may comprise one or more optional additional features corresponding to one or more aspects mentioned in connection with the proposed concept or one or more examples described above (Fig. 1 - 2) and/or below (e.g. Fig. 4).

Fig. 4 shows a schematic view of a vehicle 400. In an example, the vehicle 400 comprises the apparatus described with reference to Fig. 3. In an example, the vehicle 400 comprises a plurality of antennas for beam forming. The vehicle 400 may be or may comprise the UE described with reference to Fig. 1. The vehicle 400 may be equipped with a connectivity system 410 (CS) to deal with V2X communications. The V2X communication may use Wireless Local Area Network (WLAN) and/or cellular networks. The CS 410 may be equipped with an antenna system 420 (AS) with one or more panels, e.g., three as shown in Fig. 4, each facing different radiating directions. Each panel may be composed of one or more antenna elements, fed by a digitally controlled analog feeding network. The CS 410 can also perform spatial multiplexing by the use of digital precoding of the baseband signals received from several RF ports. Further, the vehicle 400 may be equipped with one or more sensors 430, 440 (sensing devices) such as ultrasounds, automotive radar, LIDAR that are enabled to map the environment of the vehicle 400 in real-time.

Intelligent Transportation Systems (ITS) can be enabled by connected vehicles to improve safety and efficiency in roadways. In order to provide wireless access in vehicular environments, a wireless Access Vehicular Environment (WAVE) system architecture is provided. A WAVE system can consist of roadside units (RSUs). The RSUs and mobile terminals may form WAVE basic service sets (WBSSs) connected to the Wide Area Network (WAN) via an appropriate portal. Also, the Wireless Access in Vehicular Environments (WAVE) architecture and standards can support ITS safety and non-safety applications. The WAVE standards can be based on IEEE 802.1 l p (e.g. Dedicated Short Range Communications "DSRC"), to support Vehicle-to-Anything (V2X) communications, which can include V2X communication for vehicle-to-Anything (V2I), Vehicle-to-vehicle (V2V), and Vehicle-to-person/pedestrian (V2P) communications.

The DSRC/802.11p can support short-range and low power communication in the 5.9GHz spectrum, which has been dedicated for ITS. However, some ITS applications can use the deployment of DSRC/802.11p based Road Side Units (RSU), which can impose scalability and deployment cost challenges. Despite of the standards and dedicated spectrum, DSRC/802.11 p based ITS applications have not been widely deployed.

Existing cellular systems, such as third generation partnership project (3GPP) long term evolution (LTE), can be used as an alternative to DSRC/802.11 p given its large scale coverage and efficient spectrum utilization. However, one of the issues in 3GPP LTE is that the system was mostly developed for IP communication over the Internet. Also, cellular systems lack the capability to enable direct communication between devices V2X devices within a relatively short range, such as, for example, between 50 to 350 meters (m) with low latency. Proximity-based Service (ProSe) can be utilized in a UE, an evolved Node B (eNB) and a mobility management entity (MME) in wireless communications systems. That is, ProSe can be utilized for UE to UE (or D2D).

Various services can be provided through V2X communication. An ITS system of a vehicle performing the V2X communication can provide various services for traffic safety and efficiency. One of the services is a cooperative awareness (CA) service. Cooperative awareness within road traffic means that a road user and roadside infrastructure can be aware of mutual positions, dynamics and attributes. Such awareness is a basic for several road safety and traffic efficiency applications. Therefore, a periodical transmission of cooperative awareness message is necessary which may lead to an undesired reporting overhead. This reporting overhead can be reduced with the method described above.

For example, the vehicle 400 may communicate with a further vehicle to provide video data related to a certain service. The vehicle 400 may receive frequent updates from the further vehicle, e.g., position and/or trajectory intention, via customary messaging (Cooperative Perception Messages, Cooperative Awareness Messages, etc.). The vehicle 400 may sense its environment to determine information about the environment. This information may be used to map an environmental model and by merging the environmental model with the updates received from the further vehicle the vehicle may generate a predictive environmental model.

Based on this predictive environmental model the vehicle 400 may detect an upcoming scenario where both vehicles will be static, which may lead to a decreased channel dynamic. Thus, the vehicle 400 may predict e.g., a longer channel coherence time and static beams for that static period. Therefore, a more efficient scheduling and resource allocation can be achieved. Further, the vehicle may transmit information about the predicted channel dynamic to the communication device, e.g., a base station. Thus, the base station may be enabled to reduce the frequency of requests for channel state information feedback. Further, the base station may fix a reduced set of beams for beam management. The vehicle 400 can also reduce the set of possible codebook-based digital precodings.

Further, the vehicle 400 can be enabled to refine the analog beam in the static period. For example, predictive QoS module of the vehicle 400 may be informed that a higher link quality is expected for the static period, and therefore higher quality video can be delivered reliably. Thus, the vehicle 400 may send the data in the static period with fewer required channel state feedbacks and beam management updates, alleviating the channel from overheads. The vehicle 400 may sense a departure of the further vehicle and may re-configures the connectivity system for more frequent channel sensing and coarser beams.

For example, the vehicle 400 may be a land vehicle, such a road vehicle, a car, an automobile, an off-road vehicle, a motor vehicle, a bus, a robo-taxi, a van, a truck or a lorry. Alternatively, the vehicle 400 may be any other type of vehicle, such as a train, a subway train, a boat or a ship. For example, the proposed concept may be applied to public transportation (trains, bus) and future means of mobility (e.g., robo-taxis).

As is evident from the above examples, various examples of the present disclosure relate to multi-MNO relaying for mobile devices in low or out of coverage. The development of 4G has brought increased attention to the automotive industry as a vertical integration expected to leverage the most advanced features of the new generation of wireless communications. Even in the case of 4G the user may face low or out of coverage situations, depending on the used sim card, i.e. coverage provided by the MNO, it uses. Consequently, a mobile device, i.e. a UE 410, 420, might experience low or out of coverage.

More details and aspects are mentioned in connection with the embodiments described above. The example shown in Fig. 4 may comprise one or more optional additional features corresponding to one or more aspects mentioned in connection with the proposed concept or one or more examples described above (Fig. 1 - 3).

The aspects and features described in relation to a particular one of the previous examples may also be combined with one or more of the further examples to replace an identical or similar feature of that further example or to additionally introduce the features into the further example.

Examples may be compliant to or even comprised in certain standard specifications, such as those specified by the 3GPP. Configuration information may for example be communicated using signaling radio bearers, e.g. by means of Radio Resource Control (RRC) messages, which are, for example, specified in the *.331 series of 3GPP as layer 3 control plane messages. For example, physical layer specification, e.g. by means of Doppler Delay Resolutions and other physical layer specifications may also be affected by present embodiments, e.g. *.201, *.211, *.212, *.213, *.214, *.216 series in the 3GPP specifications.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

If some aspects have been described in relation to a device or system, these aspects should also be understood as a description of the corresponding method and vice versa. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example.

## Claims

1. A method (100) for user equipment for predicting a channel dynamic of a radio channel used for communication between the user equipment and a communication device, comprising
obtaining (110) information about a mobile obstacle of an environment and a movement speed of the mobile obstacle;
generating (120) a predictive environmental model based on the obtained information about the mobile obstacle and the movement speed of the mobile obstacle;
predicting (130) the channel dynamic of the radio channel based on the predictive environmental model by predicting the change of the environment by the movement speed of the mobile obstacle; and
adjusting a repetition rate of a channel state information report of the radio channel using the predicted channel dynamic.

2. The method (100) according to any of the preceding claims, further comprising
forming a beam for communication between the user equipment and the communication device.

3. The method (100) according to claim 3, further comprising
adapting the beam based on the predicted channel dynamic.

4. The method (100) according to any of the preceding claims, further comprising
predicting a suitable beam pattern for transmitting a signal to the communication device and/or for receiving a signal from the communication device.

5. The method (100) according to any of the preceding claims, wherein
information about the environment is obtained by:
determining information about the environment using one or more sensors of the user equipment; and/or
receiving information about the environment.

6. The method (100) according to any of the preceding claims, further comprising
predicting a radio channel quality.

7. The method (100) according to claim 6, further comprising
adjusting a data transmission parameter based on the predicted radio channel quality.

8. The method (100) according to claim 6 or 7, further comprising
adapting a user service based on the predicted radio channel quality

9. An apparatus (30) part of user equipment, comprising:
one or more interfaces (32) configured to communicate with a communication device;
and
processing circuitry (34) configured to control the one or more interfaces (32) and to:
perform the method according to any of claims 1 - 8.

10. A vehicle (400) comprising the apparatus according to claim 9.

11. The vehicle (400) according to claim 10, further comprising
a plurality of antennas for beam forming.

12. A computer program having a program code for performing the method according to any one of claims 1 - 8, when the computer program is executed on a computer, a processor, or a programmable hardware component part of user equipment.

## Patentansprüche

1. Verfahren (100) für eine Benutzerausrüstung zum Vorhersagen einer Kanaldynamik eines Funkkanals, der für eine Kommunikation zwischen der Benutzerausrüstung und einer Kommunikationsvorrichtung verwendet wird, umfassend
Erhalten (110) von Informationen über ein mobiles Hindernis einer Umgebung und einer Bewegungsgeschwindigkeit des mobilen Hindernisses;
Erzeugen (120) eines prädiktiven Umgebungsmodells basierend auf den erhaltenen Informationen über das mobile Hindernis und der Bewegungsgeschwindigkeit des mobilen Hindernisses;
Vorhersagen (130) der Kanaldynamik des Funkkanals basierend auf dem prädiktiven Umgebungsmodell durch Vorhersagen der Veränderung der Umgebung durch die Bewegungsgeschwindigkeit des mobilen Hindernisses; und
Anpassen einer Wiederholungsrate eines Kanalzustandsinformationsberichts des Funkkanals unter Verwendung der vorhergesagten Kanaldynamik.

2. Verfahren (100) nach einem der vorstehenden Ansprüche, ferner umfassend
Ausbilden eines Strahls für die Kommunikation zwischen der Benutzerausrüstung und der Kommunikationsvorrichtung.

3. Verfahren (100) nach Anspruch 3, ferner umfassend
Anpassen des Strahls basierend auf der vorhergesagten Kanaldynamik.

4. Verfahren (100) nach einem der vorstehenden Ansprüche, ferner umfassend
Vorhersagen eines geeigneten Strahlmusters zum Übertragen eines Signals an die Kommunikationsvorrichtung und/oder zum Empfangen eines Signals von der Kommunikationsvorrichtung.

5. Verfahren (100) nach einem der vorstehenden Ansprüche, wobei
Informationen über die Umgebung erhalten werden durch:
Bestimmen von Informationen über die Umgebung unter Verwendung eines oder mehrerer Sensoren der Benutzerausrüstung; und/oder
Empfangen von Informationen über die Umgebung.

6. Verfahren (100) nach einem der vorstehenden Ansprüche, ferner umfassend
Vorhersagen einer Funkkanalqualität.

7. Verfahren (100) nach Anspruch 6, ferner umfassend
Anpassen eines Datenübertragungsparameters basierend auf der vorhergesagten Funkkanalqualität.

8. Verfahren (100) nach Anspruch 6 oder 7, ferner umfassend
Anpassen eines Benutzerdienstes basierend auf der vorhergesagten Funkkanalqualität

9. Einrichtung (30), die Teil einer Benutzerausrüstung ist, umfassend:
eine oder mehrere Schnittstellen (32), die konfiguriert sind, um mit einer Kommunikationsvorrichtung zu kommunizieren; und
eine Verarbeitungsschaltung (34), die konfiguriert ist, um die eine oder die mehreren Schnittstellen (32) zu steuern und zum: Durchführen des Verfahrens nach einem der Ansprüche 1 bis 8.

10. Fahrzeug (400), umfassend die Einrichtung nach Anspruch 9.

11. Fahrzeug (400) nach Anspruch 10, ferner umfassend
eine Vielzahl von Antennen zum Strahlformen.

12. Computerprogramm, das einen Programmcode zum Durchführen des Verfahrens nach einem der Ansprüche 1 bis 8 aufweist, wenn das Computerprogramm auf einem Computer, einem Prozessor oder einer programmierbaren Hardwarekomponente der Benutzerausrüstung ausgeführt wird.

## Revendications

1. Procédé (100) destiné à un équipement utilisateur pour prévoir une dynamique de canal d'un canal radio utilisé pour une communication entre l'équipement utilisateur et un dispositif de communication, comprenant
l'obtention (110) d'informations concernant un obstacle mobile dans un environnement et concernant une vitesse de déplacement de l'obstacle mobile ;
la génération (120) d'un modèle environnemental prédictif sur la base des informations obtenues concernant l'obstacle mobile et la vitesse de déplacement de l'obstacle mobile ;
la prédiction (130) de la dynamique de canal du canal radio sur la base du modèle environnemental prédictif en prévoyant le changement de l'environnement en fonction de la vitesse de déplacement de l'obstacle mobile ; et
le réglage d'un taux de répétition d'un rapport d'informations d'état de canal du canal radio à l'aide de la dynamique de canal prédite.

2. Procédé (100) selon l'une quelconque des revendications précédentes, comprenant en outre
la formation d'un faisceau pour une communication entre l'équipement utilisateur et le dispositif de communication.

3. Procédé (100) selon la revendication 3, comprenant en outre
l'adaptation du faisceau sur la base de la dynamique de canal prédite.

4. Procédé (100) selon l'une quelconque des revendications précédentes, comprenant en outre
la prédiction d'un modèle de faisceau approprié pour la transmission d'un signal au dispositif de communication et/ou pour la réception d'un signal provenant du dispositif de communication.

5. Procédé (100) selon l'une quelconque des revendications précédentes, dans lequel
des informations concernant l'environnement sont obtenues par :
la détermination d'informations concernant l'environnement à l'aide d'un ou de plusieurs capteurs de l'équipement utilisateur ; et/ou
la réception d'informations concernant l'environnement.

6. Procédé (100) selon l'une quelconque des revendications précédentes, comprenant en outre
la prédiction d'une qualité de canal radio.

7. Procédé (100) selon la revendication 6, comprenant en outre
le réglage d'un paramètre de transmission de données sur la base de la qualité de canal radio prédite.

8. Procédé (100) selon la revendication 6 ou 7, comprenant en outre
l'adaptation d'un service utilisateur sur la base de la qualité de canal radio prédite

9. Appareil (30) faisant partie d'un équipement utilisateur, comprenant :
une ou plusieurs interfaces (32) configurées pour communiquer avec un dispositif de communication ; et
une circuiterie de traitement (34) configurée pour commander la ou les interfaces (32) et pour : réaliser le procédé selon l'une quelconque des revendications 1 à 8.

10. Véhicule (400) comprenant l'appareil selon la revendication 9.

11. Véhicule (400) selon la revendication 10, comprenant en outre
une pluralité d'antennes pour la formation de faisceaux.

12. Programme informatique présentant un code de programme permettant de réaliser le procédé selon l'une quelconque des revendications 1 à 8 lorsque le programme informatique est exécuté sur un ordinateur, un processeur, ou un composant matériel programmable faisant partie d'un équipement utilisateur.
